# EUROPÄISCHE PATENTANMELDUNG

(11) **EP 1 050 493 A2**
(43) Veröffentlichungstag der Anmeldung: **08.11.2000**
(21) Anmeldenummer: 00100095.9
(22) Anmeldetag: 07.01.2000
(51) Int. Cl.: B65G 19/02

(54) **Einkettenförderer**

(30) Priorität: 04.05.1999 DE 19920582
(71) Anmelder: TRAPO AG, 48712 Gescher-Hochmoor (DE)
(72) Erfinder: Schöttler, Ludger, 48734 Reken (DE)
(74) Vertreter: Lenzing, Andreas, Dr.

(57) **Zusammenfassung**

Die Erfindung betrifft einen Stückgutförderer mit einem Grundrahmen (1), mit dem Grundrahmen zugeordneten Führungselementen (3), mit einem von einem Primärantrieb (10,15) betätigten Antriebsmittel (9), mit wenigstens einem von dem Antriebsmittel angetriebenen Wagen (4), der von den Führungselementen entlang einer Bahn (11,12) geführt ist und der einen Stückgutträger (6) trägt, wobei der Wagen (4) über ein Kupplungsglied (20,21) mit dem Antriebsmittel (9) in Eingriff steht, wobei die Führungselemente (3) plattenförmig mit Schmalseiten ausgeführt sind und daß der Wagen mittels Rollen (5) im Bereich der Schmalseiten geführt ist, wobei die Rollen umfangsseitig eine umlaufende Nut (23) mit einem den Schmalseiten angepaßten Querschnitt aufweisen.

## Beschreibung

Die vorliegende Erfindung betrifft einen Stückgutförderer mit den Merkmalen des Oberbegriffs des Anspruchs 1. Derartige Stückgutförderer, auch Senkrechtförderer oder Elevatoren genannt, dienen zur Entnahme von einzelnen Stückgütern, beispielsweise aus einem horizontal laufenden Rollenförderer, um diese auf einen anderen Förderer umzusetzen, in eine höhere oder niedrigere Ebene zu befördern oder den Stückgutfluß zu sortieren.

Aus der Praxis sind Stückgutförderer mit einem umlaufenden Führungselement bekannt, in dem ein Wagen mit einem außen die Bahn umgebenden Antriebsmittel angetrieben werden. Weiter sind Stückgutförderer bekannt, die eine einzelne geschlossene Laufbahn aufweisen, an der der jeweilige Stückgutträger geführt und in den unterschiedlich orientierten Abschnitten mittels eines Planetengetriebes in der horizontalen Orientierung gehalten wird. Die bekannten Stückgutförderer sind in der Fertigung aufwendig, können nur begrenzt an komplexe Bahnkurven angepaßt werden und erlauben zum Teil keinen reversierenden Betrieb.

Es ist daher Aufgabe der vorliegenden Erfindung, einen Stückgutförderer zu schaffen, der bei einem mechanisch einfachen Aufbau flexibel für verschiedene erforderliche Bahnkurven eingerichtet werden kann und der bei Bedarf reversierbar betrieben werden kann.

Diese Aufgabe wird von einem Stückgutförderer mit den Merkmalen des Anspruchs 1 gelöst. Weil die Führungselemente plattenförmig mit Schmalseiten ausgeführt sind und der Wagen mittels Rollen im Bereich der Schmalseiten geführt ist, wobei die Rollen um eine Drehachse drehbar sind und mit den Führungselementen in Richtung der Drehachse einen Formschluß bilden, insbesondere die Rollen umfangsseitig eine umlaufende Nut mit einem den Schmalseiten angepaßten Querschnitt aufweisen, ergibt sich durch die vielseitige Gestaltungsmöglichkeit der Führungselemente eine einfache Möglichkeit, verschiedene Führungsbahnen einzurichten und außerdem eine Führung durch einfaches Abrollen. Wenn dabei vorgesehen ist, daß die Mittelpunkte der Rollen ein ebenes Rechteck, insbesondere ein Quadrat aufspannen und das Kupplungsglied im Mittelpunkt des Rechtecks angeordnet ist, so gewährleistet dies zum einen eine konstante Orientierung des Stückgutträgers bezüglich der Horizontalen und erlaubt zum anderen im Bereich gekrümmter Führungselemente eine Änderung der Krümmungsrichtung, also Kurven mit einem Wendepunkt. Ein besonders einfacher und wartungsarmer Aufbau ergibt sich, wenn das Antriebsmittel eine Rollenkette ist, wobei das Kupplungsglied einen verlängerten Bolzen eines Kettengliedes umfaßt. Weiter können die Führungselemente einfach gefertigt werden, wenn die Schmalseiten im wesentlichen unprofiliert sind.

Die Führungselemente können auf Grundplatten angeordnet sein, die im Bereich der Bahn eine Freinut tragen, wobei die Nutenflanken der Freinut zumindest abschnittsweise hinter die Schmalseiten der Führungselemente zurückspringen. So können zum einen die Führungselemente einfach auf die Grundplatten aufgeschraubt werden und zum anderen die Rollen innerhalb des Rücksprungs für die erforderliche Führung quer zu den Führungselementen sorgen. Wenn außerdem vorgesehen ist, daß die Führungselemente und die Freinuten für jede Rolle eine Bahn gleicher Länge begrenzen und daß die Bahnen um den Abstand der Rollen voneinander beabstandet sind, ist eine gleichmäßige, sichere Führung entlang der gesamten Bahn des Stückgutträgers gewährleistet, wobei immer wenigstens drei Rollen im Eingriff mit den Führungselementen stehen. Ein gleichmäßiger Antrieb ergibt sich dabei, wenn das Antriebsmittel in einer eine separate Bahn bildenden Führung geführt ist, die mittig zwischen den Bahnen für die Rollen verläuft.

Die angestrebte flexible Bauweise wird gefördert, wenn die Bahnen und die Führung abschnittsweise in Segmentplatten angeordnet sind, so daß die Segmentplatten nach Bedarf zusammengesetzt werden können und die Bahn bilden. Dabei wird die jeweilige Segmentplatte von dem Grundrahmen in ihrer Orientierung zu benachbarten Segmentplatten gehalten. Die Segmentplatten sind vorteilhaft jeweils im wesentlichen rechteckig, wobei die Bahnen und die Führung jeweils an zwei gegenüberliegenden oder benachbarten Seiten offen sind. Wenn die von den Bahnen und der Führung durchsetzten Seiten einander gegenüberliegen, wird eine in der räumlichen Richtung unveränderte Beförderung des Stückgutträgers, geradeaus oder seitlich versetzt, möglich. Wenn andererseits die von den Bahnen und der Führung durchsetzten Seiten benachbart sind, so wird durch diese Segmentplatte die Förderrichtung geändert, bei rechteckigen Platten um 90°.

Eine bevorzugte Ausführungsform ergibt sich, wenn an den Seiten der Segmentplatten die Führung mittig und jeweils eine Bahn in gleichem Abstand zu jeder Seite der Führung angeordnet ist. So wird gewährleistet, daß die jeweilige Segmentplatte wendbar mit beiden Anschlußseiten an der benachbarten Platte angeschlossen werden kann. Falls die Bahn innerhalb der Segmentplatte einen rechten Winkel beschreibt, kann diese Segmentplatte sowohl für eine Linkskurve als auch für eine Rechtskurve verwendet werden. Eine besonders gute Kompatibilität aller Segmentplatten untereinander ergibt sich, wenn jede Segmentplatte mit beiden von Bahnen und Führung durchsetzen Seiten an beiden Seiten einer beliebigen anderen Segmentplatte ansetzbar ist.

Eine für die insoweit beschriebene Vorrichtung günstige Ausführung sieht vor, daß die Grundplatten aus einem Kunststoff gefertigt sind, so daß sich hinsichtlich Geräuschentwicklung und Verschleiß vorteilhafte Verhältnisse ergeben. Entsprechendes gilt für eine Ausführung, bei der die Führungselemente aus einem Stahl und die Rollen aus einem Stahl oder aus einem Kunststoff gefertigt sind.

Im folgenden wird ein Ausführungsbeispiel der vorliegenden Erfindung anhand der Zeichnung beschrieben. Es zeigen:
- Figur 1:: Einen erfindungsgemäßen Stückgutförderer mit rechteckiger Bahnkurve in einer Seitenansicht;
- Figur 2:: den Förderer gemäß Figur 1 in einer Draufsicht; sowie
- Figur 3:: eine Detailansicht in der Perspektive gemäß Figur 2 in einem Querschnitt.

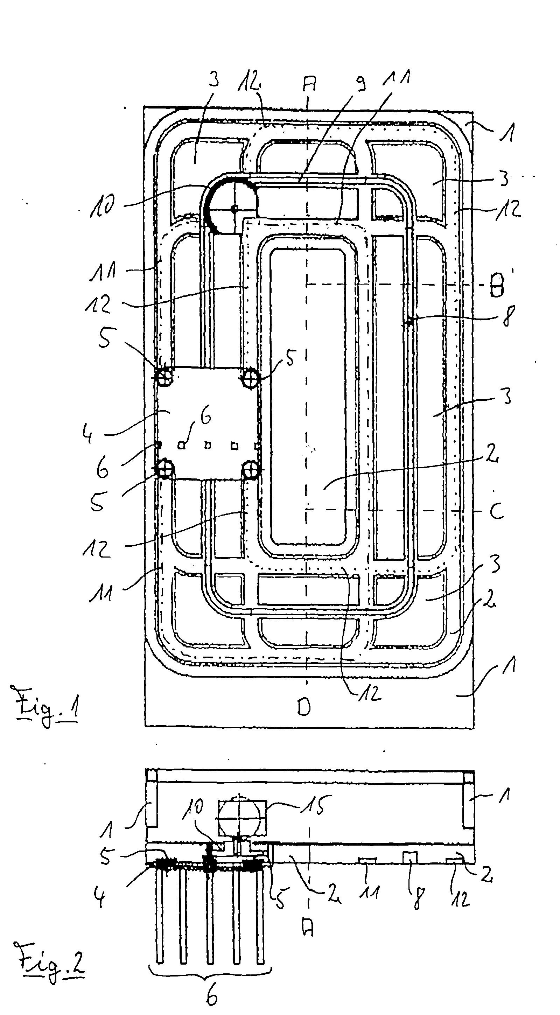

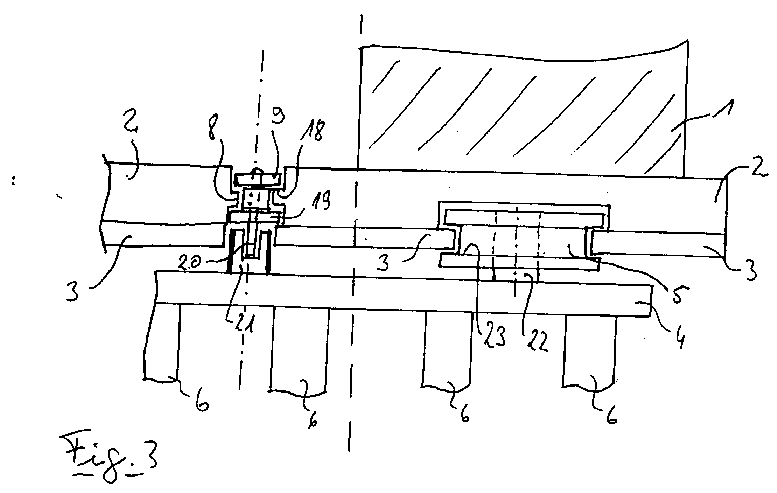

In der Figur 1 ist ein erfindungsgemäßer Stückgutförderer in einer Ansicht senkrecht auf die Bahnkurven dargestellt. Der Stückgutförderer umfaßt einen Grundrahmen 1, von dem Grundrahmen gehaltene Grundplatten 2 sowie Führungselemente 3, die in der Ansicht gemäß Figur 2 die Grundplatten 2 im wesentlichen verdecken. Ein Wagen 4 ist mit in der Darstellung gemäß Figur 1 an sich nicht sichtbaren Rollen 5 zwischen den Führungselementen 3 geführt und bewegt sich in einer Ebene parallel zu den Führungselementen 3 und den Grundplatten 2. Der Wagen 4 trägt als Stückgutträger eine Gabel 6.

In einer Ebene hinter den Führungselementen 3 läuft entlang einer Führung 8 ein Zugmittel in Gestalt einer Rollenkette 9. Die Rollenkette 9 wird über ein Kettenrad 10 zum Umlauf innerhalb der Führung 8 angetrieben.

Die Führungselemente 3 begrenzen insgesamt vier gleich lange Bahnkurven, von denen für die untere, linke Rolle 5 des Wagens 4 eine Bahnkurve 11 mit einer Strichpunktlinie veranschaulicht ist, während für die obere rechte Rolle 5 des Wagens 4 die betreffende Bahnkurve 12 mit einer gepunkteten Linie dargestellt ist. Es ergeben sich also für die vier Rollen 5 des Wagens 4 insgesamt vier Bahnkurven, die jeweils gleiche Gestalt und gleiche Bahnlänge aufweisen. Die vier Bahnkurven sind um den gegenseitigen Abstand der vier Rollen 5 des Wagens 4 gegeneinander versetzt. Die Führung 8 der Rollenkette 9 verläuft wiederum mit gleicher Gestalt und gleicher Länge mittig innerhalb der vier Bahnkurven.

Die Grundplatten 2 und die Führungselemente 3 sind auf Segmentplatten angeordnet und zu den Bahnkurven 11, 12 zusammengesetzt. Eine Segmentplatte ist entlang einer Schnittlinie A - B in der Figur 1 oben rechts angedeutet. Die darunterliegende Segmentplatte ist rechteckig entlang der Linie B - C abgeteilt, während die rechte untere Segmentplatte entlang der Schnittlinie C - D von den benachbarten Segmentplatten getrennt ist. Auf der linken Seite des Stückgutförderers ist eine entsprechende Teilung vorgesehen, die jedoch der Übersichtlichkeit halber nicht dargestellt ist.

Die Figur 2 zeigt den Stückgutförderer gemäß Figur 1 in einer Draufsicht. Es ist erkennbar, daß der Grundrahmen 1 die Grundplatten 2 an seiner Vorderseite trägt. Die Grundplatten 2 sind zur Bildung von Segmentplatten entlang der Linie A entsprechend Figur 1 vertikal geteilt. Der Wagen 4 läuft mit seinen Rollen 5 entlang der Bahnkurven 11, 12. Zwischen den Bahnkurven 11, 12 ist die Führung 8 der Rollenketten 9 veranschaulicht.

In der Ebene der Rollenkette 9 ist in der Draufsicht gemäß Figur 2 das Kettenrad 10 dargestellt, das von einem Getriebemotor 15 angetrieben wird. Der Getriebemotor 15 treibt dabei das Kettenrad 10 über eine Rutschkupplung an, die bei Überlast den Kraftfluß trennt.

Die Figur 3 zeigt den bislang beschriebenen Aufbau in einem vergrößerten Querschnitt in der Perspektive gemäß Figur 2. Der Querschnitt läuft hierbei in zwei Ebenen, nämlich einmal in der linken Hälfte der Figur 3 durch den geometrischen Mittelpunkt des Wagens 4 und in der rechten Hälfte gemäß Figur 3 durch den Mittelpunkt einer Rolle 5.

In der Figur 3 links ist die Führung 8 der Rollenkette 9 in einem Querschnitt veranschaulicht. Es handelt sich hierbei um eine in die Grundplatten 2 eingebrachte schlitz- oder nutförmige Führung, die mit Rippen oder Nasen 18 ein Auswandern der Rollenkette 9 quer zur vorgesehenen Bewegungsrichtung unterbindet. Die Rollenkette 9 ist in ihrer Bauform an sich bekannt. Sie trägt in der Darstellung gemäß Figur 3 einen über eine Lasche 19 hinausstehenden Bolzen 20, der in ein mittig an dem Wagen 4 befestigtes Lager 21, beispielsweise eine Lagerbuchse, eingreift. Im rechten Bereich der Figur 3 ist eine Rolle 5 des Wagens 4 veranschaulicht. Sie sitzt auf einer Achse 22 drehbar gelagert. Die Führungselemente 3 greifen dabei beidseitig in eine Nut 23 ein, die vom Umfang her mit kastenförmigem Querschnitt in die Rolle 5 eingestochen ist. Die Rolle 5 kann sich in dieser Weise gesichert nur minimal in Richtung der Achse 22 zwischen den Führungen 3 bewegen, während sie in senkrechter Richtung der -Darstellung gemäß Figur 3 entlang einer Bahn zusammen mit dem Wagen 4 beweglich ist.

In der Praxis wird der insoweit beschriebene Stückgutförderer ausgehend von seiner Position gemäß Figur 1 in Betrieb gesetzt, indem das Kettenrad 10 von dem Getriebemotor 15 in Drehung versetzt wird. Die Rollenkette 9 läuft dabei entlang ihrer Führung 8 innerhalb des Rahmens 1 um und nimmt über den verlängerten Bolzen 20 und das Lager 21 den Wagen 4 mit. Die Rollen 5 wälzen sich dabei an der einen oder der anderen benachbarten Stirnseite der Führungselemente 3 ab. Sie beschreiben eine Bahn 11, 12, die kongruent zu der Führung 8 der Rollenkette 9 ist.

Wird der Wagen 8 ausgehend von der Stellung gemäß Figur 1 nach oben bewegt, so folgt im Bereich der oberen linken Ecke des Stückgutförderers die obere rechte Rolle 5 der Bahnkurve 12 und die untere linke Rolle 5 der Bahnkurve 11, so daß die Orientierung des Wagens 4 und damit auch des Stückgutträgers 6 beibehalten bleibt. Ein auf dem Stückgutträger 6 liegendes Paket oder dergleichen kann nicht von dem Stückgutträger 6 herunterfallen. Im Bereich der oberen rechten Ecke des Stückgutförderers folgen wiederum die Rollen 5 den entsprechenden Bahnkurven, wobei die beiden rechten Rollen 5 der rechten äußeren Bahnkurve folgen, während die beiden linken Rollen 5 des Wagens 4 der inneren rechten Bahnkurve folgen. Die Bewegung des Wagens 4 kehrt sich gegenüber der Position gemäß Figur 1 um und der Wagen läuft abwärts. Ein auf dem Stückgutträger 6 liegendes Paket kann dann auf einen einseitig offenen Rollenförderer abgelegt werden, während es zuvor von einem ähnlichen Rollenförderer abgenommen wurde.

Die Übernahme- und Übergabeposition kann in verschiedenen Ebenen liegen, so daß Höhenunterschiede überwunden werden können. Das Stückgut kann auch lediglich seitlich versetzt auf einen anderen Förderer übertragen werden oder entnommen und an anderer Position auf ein und denselben Förderer wieder aufgesetzt werden, so daß Sortiervorgänge möglich sind. Sortiervorgänge werden insbesondere dadurch möglich, daß der Förderer aufgrund seines nahezu vollkommen symmetrischen Aufbaus in beide Förderrichtungen reversierend betrieben werden kann.

Die Darstellung gemäß Figur 1 zeigt einen stark vereinfachten Aufbau des Förderers in geometrischer Hinsicht. Der Förderer ist dabei aus vier nahezu baugleichen Ecksegmenten und zwei baugleichen Geraden zusammengesetzt, deren jeweilige Stirnseite so gestaltet ist, daß sie an jedes andere Segment anzusetzen ist. Wird beispielsweise das obere rechte Segment, das entlang der Linie A - B trennbar ist, beim Aufbau um 90° im Uhrzeigersinn gedreht, so ergibt sich statt der Rechtskurve eine Linkskurve, wobei die Bahnkurven nach oben gerichtet dieses Segment verlassen. Aus einer Anzahl von Segmentplatten mit rechtem Winkel sowie mit Geraden läßt sich folglich eine nahezu beliebige Geometrie des Förderers zusammensetzen. Es ist auch möglich, ein gerades Segment in seinem Verlauf zu verdrehen, soweit dies die verwendete Rollenkette 9 erlaubt. Damit kann die bei dem zuvor beschriebenen Förderer zwingend vorgegebene eine Bewegungsebene verlassen und eine zweite Bewegungsebene erschlossen werden.

Als Material für den insoweit beschriebenen Förderer wird derzeit bevorzugt, die Grundplatten 2 aus einem Kunststoff zu fertigen, der insbesondere mit der Rollenkette 9 selbstschmierende Eigenschaften aufweist. Die Führungselemente 3 werden vorzugsweise mit Laserschneiden oder Wasserstrahlschneiden aus Aluminiumplatten oder Stahlplatten geschnitten, während die Rollen 5 Drehteile aus Stahl oder Kunststoff sind.

Der Wagen 4 und der Stückgutträger 6 sind weitgehend beliebig. Es kommen neben dem beschriebenen gabelförmigen Stückgutträger auch beliebige andere Stückgutträger bis hin zu Wannen in Betracht.

Vorteile des beschriebenen Stückgutträgers liegen in dem flexiblen und einfachen Aufbau sowie in dem sehr einfachen Antriebskonzept, das lediglich einen Getriebemotor mit Kettenrad sowie eine beidseitig geführte Rollenkette umfaßt. Es kann auch eine offene Bahnkurve, beispielsweise C-förmig, gestaltet werden, wobei eine geschlossene Rückführung der Rollenkette 9 vorgesehen sein sollte.

## Patentansprüche

1. Stückgutförderer mit einem Grundrahmen (1), mit dem Grundrahmen (1) zugeordneten Führungselementen (3), mit einem von einem Primärantrieb (10,15) betätigten Antriebsmittel (9), mit wenigstens einem von dem Antriebsmittel (9) angetriebenen Wagen (4), der von den Führungselementen (3) entlang einer Bahn (11,12) geführt ist und der einen Stückgutträger (6) trägt, wobei der Wagen (4) über ein Kupplungsglied (20,21) mit dem Antriebsmittel (9) in Eingriff steht, **dadurch gekennzeichnet,** daß die Führungselemente (3) plattenförmig mit Schmalseiten ausgeführt sind und daß der Wagen mittels Rollen (5) im Bereich der Schmalseiten geführt ist, wobei die Rollen (5) um eine Drehachse drehbar sind und mit den Führungselementen (3) in Richtung der Drehachse einen Formschluß bilden.

2. Stückgutförderer nach Anspruch 1, **dadurch gekennzeichnet,** daß die Rollen (5) umfangsseitig eine umlaufende Nut (23) mit einem den Schmalseiten angepaßten Querschnitt aufweisen.

3. Stückgutförderer nach einem der vorhergehenden Ansprüche, **dadurch gekennzeichnet,** daß die Mittelpunkte der Rollen (5) ein ebenes Rechteck, insbesondere ein Quadrat aufspannen und das Kupplungsglied (20,21) im Mittelpunkt des Rechtecks angeordnet ist.

4. Stückgutförderer nach einem der vorhergehenden Ansprüche, **dadurch gekennzeichnet,** daß das Antriebsmittel (9) eine Rollenkette ist, wobei das Kupplungsglied (20,21) einen verlängerten Bolzen eines Kettengliedes umfaßt.

5. Stückgutförderer nach einem der vorhergehenden Ansprüche, **dadurch gekennzeichnet,** daß die Schmalseiten im wesentlichen unprofiliert sind.

6. Stückgutförderer nach einem der vorhergehenden Ansprüche, **dadurch gekennzeichnet,** daß die Führungselemente (3) auf Grundplatten (2) angeordnet sind, die im Bereich der Bahn eine Freinut tragen, wobei die Nutenflanken der Freinut zumindest abschnittsweise hinter die Schmalseiten der Führungselemente (3) zurückspringen.

7. Stückgutförderer nach einem der vorhergehenden Ansprüche, **dadurch gekennzeichnet,** daß die Führungselemente (3) und die Freinuten für jede Rolle (5) eine Bahn (11,12) gleicher Länge begrenzen und daß die Bahnen (11,12) um den Abstand der Rollen (5) voneinander beabstandet sind.

8. Stückgutförderer nach einem der vorhergehenden Ansprüche, **dadurch gekennzeichnet,** daß das Antriebsmittel (9) in einer eine separate Bahn bildenden Führung (8) geführt ist, die mittig zwischen den Bahnen (11,12) für die Rollen (5) verläuft.

9. Stückgutförderer nach einem der vorhergehenden Ansprüche, **dadurch gekennzeichnet,** daß die Bahnen (11,12) und die Führung (8) abschnittsweise in Segmentplatten angeordnet sind.

10. Stückgutförderer nach einem der vorhergehenden Ansprüche, **dadurch gekennzeichnet,** daß die Segmentplatten von dem Grundrahmen (1) gehalten sind.

11. Stückgutförderer nach einem der vorhergehenden Ansprüche, **dadurch gekennzeichnet,** daß die Segmentplatten jeweils im wesentliche rechteckig sind, wobei die Bahnen (11,12) und die Führung (8) jeweils an zwei gegenüberliegenden oder benachbarten Seiten offen sind.

12. Stückgutförderer nach einem der vorhergehenden Ansprüche, **dadurch gekennzeichnet,** daß an den Seiten der Segmentplatten die Führung (8) mittig und jeweils eine Bahn (11,12) in gleichem Abstand zu jeder Seite der Führung (8) angeordnet ist.

13. Stückgutförderer nach einem der vorhergehenden Ansprüche, **dadurch** **gekennzeichnet,** daß jede Segmentplatte mit beiden von Bahnen (11,12) und Führung (8) durchsetzten Seiten an beiden Seiten einer beliebigen anderen Segmentplatte ansetzbar ist.

14. Stückgutförderer nach einem der vorhergehenden Ansprüche, **dadurch gekennzeichnet,** daß die Grundplatten (2) aus einem Kunststoff gefertigt sind.

15. Stückgutförderer nach einem der vorhergehenden Ansprüche, **dadurch gekennzeichnet,** daß die Führungselemente (3) aus einem Stahl und die Rollen (5) aus einem Stahl oder aus einem Kunststoff gefertigt sind.
